# FASCICULE DE BREVET EUROPEEN

(11) **EP 1 452 946 B1**
(45) Date de publication et mention de la délivrance du brevet: **27.09.2006**
(21) Numéro de dépôt: 04300082.7
(22) Date de dépôt: 13.02.2004
(51) Int. Cl.: G06F 1/00

(54) **Dispositif électronique et procédé sécurisés de mesure du temps**
Sichere elektronische Vorrichtung und Verfahren zur Zeitmessung
Secured electronic device and process for measuring time

(30) Priorité: 19.02.2003 FR 0302035
(43) Date de publication de la demande: 01.09.2004
(73) Titulaire: STMicroelectronics S.A., 92120 Montrouge (FR)
(72) Inventeur: Orlando, William, 13790 Peynier (FR); Nicolai, Jean, 13790 Chateauneuf le Rouge (FR)
(74) Mandataire: de Beaumont, Michel

(56) Documents cités:
- WO-A-01/25870
- US-A- 5 964 883

## Description

La présente invention concerne de façon générale les systèmes de gestion de droits d'utilisation de fichiers numériques. On distingue essentiellement deux types de droits d'utilisation. Un premier type de droits, dits à conditions de nombre, concerne la possibilité d'utiliser un fichier numérique un nombre prédéterminé de fois. Un deuxième type de droits, dits à conditions temporelles, concerne la possibilité d'utiliser un fichier numérique pendant une durée cumulée prédéterminée ou jusqu'à une date limite prédéterminée.

Parmi les exemples d'application de la présente invention, on citera la gestion des droits d'utilisation de fichiers vidéo, de fichiers musicaux (MP3), radio ou de télédiffusion, etc. Les droits d'utilisation ou d'exploitation de contenus gérés par un système à conditions temporelles sont le plus souvent les droits d'utilisation directs, c'est-à-dire d'écoute d'un fichier numérique audio ou de visionnement d'une séquence vidéo. D'autres droits d'exploitation comme la copie, le transfert ou l'impression de données numériques sont en général gérés par les systèmes liés à des conditions de nombre plutôt qu'à des conditions temporelles. Il n'est toutefois pas exclu que certains systèmes de gestion de droits utilisent des conditions temporelles (par exemple, calendaires) pour fixer une période de temps pendant laquelle le titulaire des droits est autorisé à copier, prêter, transférer ou imprimer un contenu numérique.

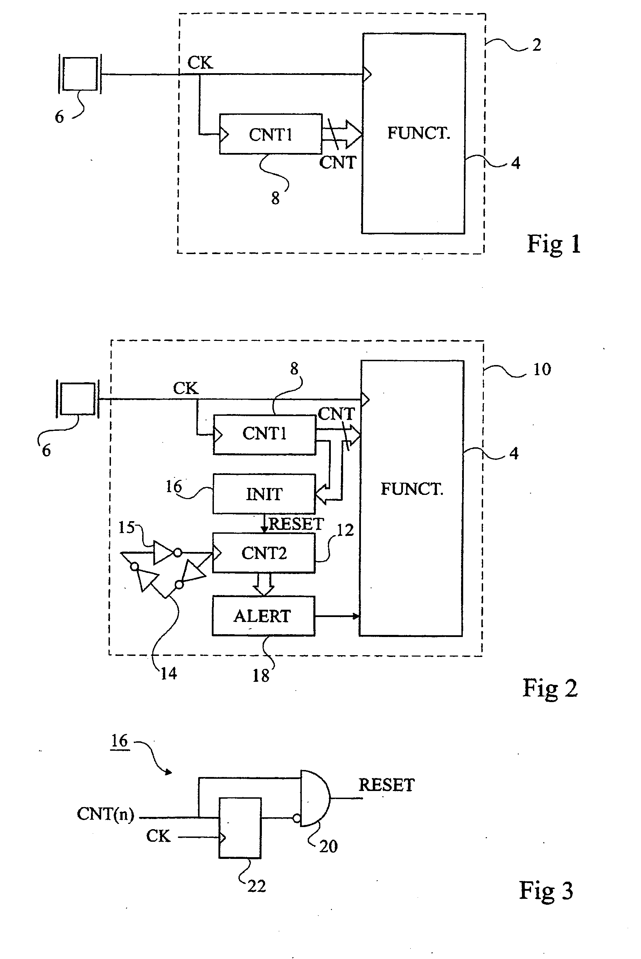

La figure 1 représente de façon très schématique et sous forme de blocs, un exemple de circuit intégré permettant une gestion de droits à conditions temporelles. Le circuit comprend un bloc fonctionnel 4 (FUNCT) permettant de lire un fichier musical mémorisé, par exemple téléchargé depuis des moyens non représentés. Le bloc 4 est un bloc synchrone qui fonctionne en cadence avec un signal d'horloge CK. La fréquence du signal CK, à partir duquel le bloc 4 produit notamment des signaux musicaux, doit avoir une grande précision. Pour cette raison, le signal CK est produit par un oscillateur à quartz 6. Dans l'état de la technique, il est impossible d'intégrer un tel oscillateur dans un circuit intégré, et l'oscillateur 6 est externe au circuit 2. Un compteur 8 (CNT1) cadencé par le signal d'horloge CK donne une mesure du temps. Le fichier musical pouvant être lu par le bloc 4 contient, par exemple, une date limite d'utilisation. Le bloc 4 comprend des moyens non représentés pour comparer la date limite d'utilisation et le contenu CNT du compteur 8, et pour permettre la lecture du fichier musical jusqu'à ce que le contenu du compteur 8 soit supérieur à la date limite d'utilisation.

La mesure du temps représentée par le contenu du compteur 8 n'est fiable que si le circuit 2 reste en fonctionnement en permanence, et reste cadencé par un signal d'horloge CK dont la fréquence ne change pas. Des moyens connus permettent de vérifier que le circuit 2 reste en fonctionnement et reçoit en permanence un signal d'horloge, afin d'interdire la lecture d'un fichier musical mémorisé après un arrêt du circuit 2 ou du signal CK.

Par contre, l'oscillateur à quartz 6 étant externe au circuit 2, il reste possible, sans arrêter le signal CK, de réduire sa fréquence entre deux utilisations du circuit 2 de manière à retarder, de manière non autorisée, l'instant auquel le contenu du compteur 8 dépasse la date limite d'utilisation (que ce soit par un test calendaire ou par une durée maximale).

La publication de demande de brevet américaine US 5,964,883 A divulgue un dispositif de surveillance des variations de fréquence d'une horloge sur un bus periphérique destiné à améliorer le fonctionnement d'un périphérique en présence de telles variations.

La publication de demande de brevet internationale WO01/25870 A2 divulgue un dispositif de surveillance d'une horloge utilisée pour cadencer un compteur d'authorization d'usage basé sur une comparaison des temps tels que mesurés par l'horloge système et l'horloge interne.

Aucune de ces publications ne divulgue la ré-initialisation d'un compteur cadencé par un oscillateur interne chaque fois que le contenu d'un deuxième compteur cadencé par l'horloge à surveiller est un multiple d'une valeur prédéterminée.

Un objet de la présente invention est de prévoir un circuit électronique comportant un moyen fiable de mesurer le temps, qui ne soit pas susceptible de subir un piratage.

La présente invention vise également un procédé sécurisé de mesure du temps.

Pour atteindre ces objets, ainsi que d'autres, la présente invention prévoit un circuit intégré comprenant un premier compteur cadencé par un signal d'horloge prévu pour avoir une première période et fourni par un oscillateur externe au circuit, et comprenant un deuxième compteur cadencé avec une deuxième période par un oscillateur interne au circuit, le deuxième compteur étant réinitialisé chaque fois que le contenu du premier compteur est un multiple d'une première valeur prédéterminée, et un moyen pour activer un signal d'alerte lorsque le deuxième compteur atteint une deuxième valeur prédéterminée telle que le produit de la deuxième valeur prédéterminée par la deuxième période est supérieur au produit de la première valeur prédéterminée par la première période.

Selon un mode de réalisation de la présente invention, le signal d'alerte est activé lorsque la période courante du signal d'horloge est supérieure à une période seuil, le produit de la deuxième valeur prédéterminée par la deuxième période étant inférieur au produit de la première valeur prédéterminée par la période seuil.

Selon un mode de réalisation de la présente invention, la deuxième période est comprise entre une limite inférieure et une limite supérieure, le produit de la deuxième, valeur prédéterminée par la limite inférieure étant supérieur au produit de la première valeur prédéterminée par la première période et le produit de la deuxième valeur prédéterminée par la limite supérieure étant inférieur au produit de la première valeur prédéterminée par la période seuil.

Selon un mode de réalisation de la présente invention, l'oscillateur interne est constitué d'un nombre impair d'inverseurs connectés en série, la sortie du dernier inverseur étant reliée à l'entrée du premier inverseur.

Selon un mode de réalisation de la présente invention, le deuxième compteur est réinitialisé par un comparateur produisant un signal de réinitialisation à chaque fois que le contenu du premier compteur est un multiple de la première valeur prédéterminée.

Selon un mode de réalisation de la présente invention, la première valeur prédéterminée est une puissance n de 2, et le comparateur comprend une porte ET recevant sur une première entrée le bit de rang n du premier compteur et sur une deuxième entrée l'inverse de la sortie d'une bascule D, cadencée par l'oscillateur à quartz et recevant ledit bit de rang n en entrée, la sortie de la porte ET produisant le signal de réinitialisation.

La présente invention vise également un circuit tel que décrit précédemment permettant de mettre en oeuvre une fonction prédéterminée jusqu'à ce que le contenu du premier compteur atteigne une limite prédéterminée, ou jusqu'à ce que le signal d'alerte soit activé.

La présente invention vise également un procédé de mesure du temps au moyen d'un compteur prévu pour être cadencé avec une première période par un oscillateur à quartz, comprenant les étapes suivantes :
a/ cadencer un deuxième compteur avec une deuxième période, le deuxième compteur étant prévu pour être réinitialisé chaque fois que le contenu du premier compteur est un multiple d'une première valeur prédéterminée ; et
b/ activer un signal d'alerte lorsque le deuxième compteur atteint une deuxième valeur prédéterminée telle que le produit de la deuxième valeur prédéterminée par la deuxième période est supérieur au produit de la première valeur prédéterminée par la première période.

La présente invention vise également un procédé de gestion d'un droit limité dans le temps de mise en oeuvre d'une fonction prédéterminée consistant à mesurer le temps selon le procédé précédent jusqu'à ce que le contenu du premier compteur atteigne une limite prédéterminée, ou jusqu'à ce que le signal d'alerte soit activé.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment, représente de manière schématique un exemple de circuit intégré permettant une gestion de droits temporels d'un contenu numérique ;
la figure 2 représente, de manière schématique, un circuit intégré selon un mode de réalisation de la présente invention permettant une gestion de droits temporels d'un contenu numérique protégé contre le piratage ; et
la figure 3 représente un mode de réalisation du comparateur 16 de la figure 2.

Seuls les éléments nécessaires à la compréhension de la présente invention ont été représentés. De mêmes références désignent de mêmes éléments aux différentes figures.

La figure 2 représente, de façon très schématique et sous forme de blocs, un circuit intégré 10 selon l'invention, permettant comme le circuit 2 précédent une gestion de droits temporels concernant un fichier numérique, par exemple musical. Le circuit 10 comprend, comme le circuit 2, un bloc fonctionnel 4 (FUNCT) permettant de lire un fichier musical mémorisé et recevant un signal d'horloge CK depuis un oscillateur à quartz 6 externe, et un compteur 8 (CNT) de mesure du temps cadencé par le signal d'horloge CK. Selon la présente invention, le circuit 10 comporte un autre compteur 12 (CNT2) cadencé par un oscillateur 14 interne au circuit 2. La fréquence de l'oscillateur 14 est décrite par la suite. L'oscillateur 14 est, par exemple, formé par un nombre impair d'inverseurs 15 connectés en une boucle oscillante. Un premier comparateur 16 (INIT) est disposé de manière à recevoir le contenu CNT du compteur 8, et à réinitialiser le compteur 12 chaque fois que le compteur 8 contient un multiple d'une valeur prédéterminée N1. Un comparateur 18 (ALERT) est disposé de manière à comparer le contenu du compteur 12 à une seconde valeur prédéterminée N2, et à fournir un signal d'alerte au bloc 4 lorsque le contenu du compteur 12 dépasse la valeur N2.

Selon l'invention, le compteur 12, cadencé par l'oscillateur interne 14, mesure que la fréquence du signal CK ne descend pas en deçà d'une fréquence de seuil donnée. Si l'on appelle T la période réelle, ou courante, du signal CK, le comparateur 16 réinitialise le compteur 12 avec une période égale à T.N1. Le comparateur 18 fournit un signal d'alerte au bloc 4 si le compteur 12 contient une valeur N2, c'est-à-dire après que le compteur 12 ait compté, sans être interrompu, pendant une durée égale à T2.N2, où T2 est la période de l'oscillateur 14.

Si l'on appelle T1 la période nominale du signal CK, correspondant à la fréquence du signal CK prévue pour mettre le bloc 4 en fonctionnement, et pour une période T2 donnée, les valeurs N1 et N2 sont, selon l'invention, choisies de telle manière que T1.N1 < T2.N2. Ainsi, tant que la période T du signal CK reste inférieure à T2.N2/N1, le compteur 12 est toujours réinitialisé par le comparateur 16 avant d'atteindre la valeur N2 et le comparateur 18 ne produit jamais le signal d'alerte. Si par contre la fréquence du signal CK est réduite et que la période T du signal CK est telle que T est supérieure à T2.N2/N1 (par exemple dans le cas où un pirate réduit la fréquence externe entre deux utilisations du circuit), alors le compteur 12 atteindra la valeur N2 avant d'être réinitialisé par le comparateur 16, et le comparateur 18 produira le signal d'alerte. Le bloc 4 peut être prévu pour, à la réception du message d'alerte, interdire la lecture du fichier mémorisé, émettre un message d'erreur, ou pour mettre en oeuvre toute action appropriée. Bien entendu, la fonction classique du bloc 4 de surveiller l'état du compteur 8 pour détecter un dépassement de date limite d'utilisation est, de préférence, toujours présente.

L'homme du métier notera que, plus les valeurs T1.N1 et T2.N2 sont choisies proches, plus la présente invention permet de détecter une faible variation de la fréquence du signal CK.

En pratique, la valeur T1.N1 peut être sensiblement inférieure à la valeur T2.N2 de manière à tolérer une certaine augmentation de T1 avant que le signal d'alerte soit produit. Si l'on appelle T1' la période du signal CK à partir de laquelle on souhaite que le signal d'alerte soit produit, il découle de ce qui précède que les valeurs N1 et N2 seront choisies de telle manière que T1'.N1 > T2.N2, tout en vérifiant l'inégalité précédente T1.N1 < T2.N2.

Le compteur 12, les comparateurs 16 et 18 et l'oscillateur interne 14 selon la présente invention permettent ainsi de détecter une réduction de la fréquence, notamment à des fins de piratage, du signal d'horloge CK.

Les comparateurs 16 et 18 et l'oscillateur 14 sont intégrés dans le circuit 2, ce qui rend leur modification ou inactivation délicate voire impossible, et constitue un avantage de la présente invention.

D'autres avantages de l'invention sont que le compteur 12, les comparateurs 16 et 18 et l'oscillateur 14 sont simples à mettre en oeuvre, qu'ils occupent une surface réduite dans le circuit intégré 2 et ont une consommation de puissance négligeable.

En pratique, il est difficile de connaître la période d'un oscillateur interne tel que l'oscillateur 14 avec une grande précision. La période T2 de l'oscillateur 14 dépend notamment de variations du processus de fabrication du circuit intégré 2 et de la température de fonctionnement du circuit. Ainsi, la période T2 est comprise entre une valeur T2' minimale et une valeur T2" maximale, l'écart entre les périodes T2' et T2" étant, par exemple, de 20%. De préférence, les valeurs N1 et N2 seront choisies telles que T1.N1 < T2'.N2 et T1'.N1 > T2".N2.

La figure 3 représente un mode de réalisation particulièrement avantageux du comparateur 16, dans un cas où la valeur N1 est choisie égale à une puissance n de 2. Le comparateur 16 est dans un tel cas réduit à un dispositif fournissant un signal de réinitialisation RESET du compteur 12 à chaque changement du bit de rang n du compteur 8. Le comparateur 16 comprend une porte ET 20 recevant sur une première entrée le bit CNT(n) de rang n du compteur 8 et sur une deuxième entrée l'inverse de la sortie d'une bascule D 22 cadencée par le signal CK et recevant ledit bit CNT(n) en entrée. La sortie de la porte 20 produit un signal de réinitialisation RESET actif haut du compteur 12. Le comparateur 18 peut également avoir une structure semblable si la valeur N2 est une puissance de 2.

Bien entendu, la présente invention est susceptible de diverses variantes et modifications qui apparaîtront à l'homme de l'art. En particulier, la présente invention a été décrite en relation avec un compteur 8 dont le contenu sert à mesurer le temps, mais l'homme de l'art adaptera sans difficulté l'invention à un décompteur dans lequel on vient charger une valeur correspondant à la durée du droit, le droit existant tant que le décompteur contient une valeur non nulle.

De plus, la présente invention a été décrite en relation avec des droits temporels afférents à une lecture d'un fichier musical contenant sa date limite d'utilisation, mais l'homme de l'art adaptera sans difficulté l'invention à tout droit temporel afférent à l'utilisation d'un fichier numérique d'un autre type et à tout autre droit temporel inscrit dans le fichier numérique ou communiqué au circuit par tout autre moyen.

En outre, la présente invention a été décrite en relation avec un oscillateur interne 14 formé d'un nombre impair d'inverseurs connectés en boucle, mais l'homme de l'art adaptera sans difficulté l'invention à tout type approprié d'oscillateur interne, par exemple un oscillateur de type LC ou RC.

## Revendications

1. Circuit intégré (2) comprenant un premier compteur (8) cadencé par un signal d'horloge (CK) prévu pour avoir une première période (T1) et fourni par un oscillateur (6) externe au circuit, **caractérisé en ce qu'**il comprend :
un deuxième compteur (12) cadencé avec une deuxième période (T2) par un oscillateur (14) interne au circuit, le deuxième compteur (12) étant réinitialisé chaque fois que le contenu du premier compteur est un multiple d'une première valeur prédéterminée (N1) ; et
un moyen (18) pour activer un signal d'alerte lorsque le deuxième compteur (12) atteint une deuxième valeur prédéterminée (N2) telle que le produit de la deuxième valeur prédéterminée par la deuxième période (T2.N2) est supérieur au produit de la première valeur prédéterminée par la première période (T1.N1).

2. Circuit intégré selon la revendication 1, dans lequel le signal d'alerte est activé lorsque la période courante (T) du signal d'horloge (CK) est supérieure à une période seuil (T1'), le produit de la deuxième valeur prédéterminée par la deuxième période (T2.N2) étant inférieur au produit de la première valeur prédéterminée par la période seuil (T1'.N1).

3. Circuit intégré selon la revendication 2, dans lequel la deuxième période (T2) est comprise entre une limite inférieure (T2') et une limite supérieure (T2"), le produit de la deuxième valeur prédéterminée par la limite inférieure (T2'.N2) étant supérieur au produit de la première valeur prédéterminée par la première période (T1.N1) et le produit de la deuxième valeur prédéterminée par la limite supérieure (T2".N2) étant inférieur au produit de la première valeur prédéterminée par la période seuil (T1'.N1).

4. Circuit selon l'une quelconque des revendications précédentes, dans lequel l'oscillateur interne (14) est constitué d'un nombre impair d'inverseurs (15) connectés en série, la sortie du dernier inverseur étant reliée à l'entrée du premier inverseur.

5. Circuit selon l'une quelconque des revendications précédentes, dans lequel le deuxième compteur (12) est réinitialisé par un comparateur (16) produisant un signal de réinitialisation (RESET) à chaque fois que le contenu du premier compteur (8) est un multiple de la première valeur prédéterminée (N1).

6. Circuit selon la revendication 5, dans lequel la première valeur prédéterminée est une puissance n de 2, et dans lequel le comparateur (16) comprend une porte ET (20) recevant sur une première entrée le bit de rang n du premier compteur (8) et sur une deuxième entrée l'inverse de la sortie d'une bascule D (22) cadencée par l'oscillateur à quartz (6) et recevant ledit bit de rang n en entrée, la sortie de la porte ET (20) produisant le signal de réinitialisation (RESET).

7. Circuit selon l'une quelconque des revendications précédentes, permettant de mettre en oeuvre une fonction prédéterminée jusqu'à ce que le contenu du premier compteur (8) atteigne une limite prédéterminée, ou jusqu'à ce que le signal d'alerte soit activé.

8. Procédé de mesure du temps au moyen d'un compteur (8) prévu pour être cadencé avec une première période (T1) par un oscillateur à quartz (6), comprenant les étapes suivantes :
a/ cadencer un deuxième compteur (12) avec une deuxième période (T2), le deuxième compteur (12) étant prévu pour être réinitialisé chaque fois que le contenu (CNT) du premier compteur est un multiple d'une première valeur prédéterminée (N1) ; et
b/ activer un signal d'alerte lorsque le deuxième compteur (12) atteint une deuxième valeur prédéterminée (N2) telle que le produit de la deuxième valeur prédéterminée par la deuxième période (T2.N2) est supérieur au produit de la première valeur prédéterminée par la première période (T1.N1).

9. Procédé de gestion d'un droit limité dans le temps de mise en oeuvre d'une fonction prédéterminée consistant à mesurer le temps selon le procédé de la revendication 8, jusqu'à ce que le contenu (CNT) du premier compteur (8) atteigne une limite prédéterminée, ou jusqu'à ce que le signal d'alerte soit activé.

## Claims

1. An integrated circuit (2) comprising a first counter (8) clocked by a clock signal (CK) having a first period (T1) and provided by an oscillator (6) external to the circuit, **characterized in that** it comprises:
a second counter (12) clocked at a second period (T2) by an oscillator (14) internal to the circuit, the second counter (12) being reset each time the content of the first counter reaches a multiple of a first predetermined value (N1); and
means (18) for activating an alert signal when the second counter (12) reaches a second predetermined value (N2) such that the product of the second predetermined value by the second period (T2.N2) is greater than the product of the first predetermined value by the first period (T1.N1).

2. The integrated circuit of claim 1, wherein the alert signal is activated when the current period (T) of the clock signal (CK) is greater than a threshold period (T1'), the product of the second predetermined value by the second period (T2.N2) being smaller than the product of the first predetermined value by the threshold period (T1'.N1).

3. The integrated circuit of claim 2, wherein the second period (T2) ranges between a lower limit (T2') and an upper limit (T2"), the product of the second predetermined value by the lower limit (T2'.N2) being greater than the product of the first predetermined value by the first period (T1.N1) and the product of the second predetermined value by the upper limit (T2".N2) being smaller than the product of the first predetermined value by the threshold period (T1'.N1).

4. The circuit of any of the former claims, wherein the internal oscillator (14) is formed of an odd number of series-connected inverters (15), the output of the last inverter being connected to the input of the first inverter.

5. The circuit of any of the former claims, wherein the second counter (12) is reset by a comparator (16) generating a reset signal (RESET) each time the content of the first counter (8) is a multiple of the first predetermined value (N1).

6. The circuit of claim 5, wherein the first predetermined value is a power n of 2, and wherein the comparator (16) comprises an AND gate (20) receiving on a first input the bit of rank n of the first counter (8) and on a second input the inverse of the output of a D flip-flop (22) clocked by the quartz oscillator (6) and receiving said bit of rank n as an input, the output of the AND gate (20) generating the reset signal (RESET) .

7. The circuit of any of the former claims, enabling implementation of a predetermined function until the content of the first counter (8) reaches a predetermined limit, or until the alert signal is activated.

8. A method of time measurement by means of a counter (8) provided to be clocked at a first period (T1) by a quartz oscillator (6), comprising the steps of:
a/ clocking a second counter (12) at a second period (T2), the second counter (12) being provided to be reset each time the content of the first counter (CNT) is a multiple of a first predetermined value (N1); and
b/ activating an alert signal when the second counter (12) reaches a second predetermined value (N2) such that the product of the second predetermined value by the second period (T2.N2) is greater than the product of the first predetermined value by the first period (T1.N1).

9. A method for managing a time-limited right of implementation of a predetermined function consisting of measuring the time according to the method of claim 8, until the content (CNT) of the first counter (8) reaches a predetermined limit, or until the alert signal is activated.

## Patentansprüche

1. Eine integrierte Schattung (2), die einen ersten Zähler (8) aufweist, der durch ein Taktsignal (CK) getaktet wird, das eine erste Periode (T1) besitzt und durch einen extern zur Schaltung befindlichen Oszillator (6) vorgesehen wird, **dadurch gekennzeichnet, dass** die Schaltung folgendes aufweist:
einen zweiten Zähler (12), der mit einer zweiten Periode (T2) durch einen bezüglich der Schaltung internen Oszillator (14) getaktet wird, wobei der zweite Zähler (12) jedes fllial zurückgesetzt wird, wenn der Inhalt des ersten Zählers ein Vielfaches eines vorbestimmten Werts (N1) erreicht; und
Mittel (18) zum Aktivieren eines Warn- bzw. Benachrichtigungssignals, wenn zweite Zähler (12) einen zweiten vorbestimmten Wert (N2) erreicht, so dass das Produkt des zweiten vorbestimmten Werts mit der zweiten Periode (T2 N2) größer ist als das Produkt des ersten vorbestimmten Werts mit der ersten Periode (T1.N1).

2. Integrierte Schaltung nach Anspruch 1, wobei das Benachrichtigungssignal aktiviert wird, wenn die derzeitige Periode (T) des Taktsignals (CK) größer ist als eine Schwellenwertperiode (T1'), wobei das Produkt des zweiten vorbestimmten Werts mit der zweiten Periode (T2.N2) kleiner ist als das Produkt des ersten vorbestimmten Werts mit der Schwellenwertperiode (T1'.N1).

3. Integrierte Schaltung nach Anspruch 2, wobei die zweite Periode (T2) zwischen einer unteren Grenze (T2') und einer oberen Grenze (T2") rangiert, wobei das Produkt des zweiten vorbestimmten Werts mit der unteren Grenze (T2'.N2) größer ist als das Produkt des ersten vorbestimmten Werts mit der ersten Periode (T1.N1) und wobei das Produkt des zweiten vorbestimmten Werts mit der oberen Grenze (T2".N2) Kleiner ist als das Produkt des ersten vorbestimmten Werts mit der Schwellenwertperiode (T1'.N1).

4. Schaltung nach einem der vorhergehenden Ansprüche, wobei der interne Oszillator (14) aus einer ungeraden Anzahl von in Serie verbundenen Invertern (15) gebildet ist, wobei der Ausgang des letzten Inverters mit dem Eingang des ersten Inverters verbunden ist

5. Schaltung nach einem der vorhergehenden Anspruche, wobei der zweite Zähler (12) durch einen Komparator (16) zurückgesetzt wird, der ein Rücksetzsignal (RESET) jedes Mal dann erzeugt, wenn der Inhalt des ersten Zählers (8) ein Vielfaches des ersten vorbestimmten Werts (N1) ist.

6. Schaltung nach Anspruch 5, wobei der erste vorbestimmte Wert eine n-te Potenz von 2 ist, und wobei der Komparator (16) ein AND-Gate (20) aufweist, dass an einem ersten Eingang das Bit des Rangs n des ersten Zählers (8) und an einem zweiten Eingang den Kehrwert des Ausgangs eines D Flip-Flops (22) empfängt, dass durch den Quarz-Oszillator (6) getaktet ist und das Bit des Rangs n als einen Eingang empfängt, wobei der Ausgang des AND-Gates (20) das Rücksetzsignal (RESET) erzeugt.

7. Schaltung nach einem der vorhergehenden Ansprüche, welche die Implementierung einer vorbestimmten Funktion freigibt, bis der Inhalt des ersten Zählers (8) eine vorbestimmte Grenze erreicht, oder bis das Benachrichtigungssignal aktiviert wird.

8. Verfahren zur Zeitmessung mittels eines Zählers (8), der vorgesehen ist, mit einer ersten Periode (T1) durch einen Quarz-Oszillator (6) getaktet zu werden, wobei das Verfahren folgende Schritte aufweist:
a/ Takten eines zweiten Zählers (12) mit einer zweiten Periode (T2), wobei der zweite Zähler (12) vorgesehen ist, um jedes Mal dann zurückgesetzt zu werden, wenn der Inhalt des ersten Zählers (CNT) ein Vielfaches eines ersten vorbestimmten Werts (N1) ist; und
b/ Aktivieren eines Warn- bzw. Benachrichtigungssignals, wenn der zweite Zähler (12) einen zweiten vorbestimmten Wert (N2) erreicht, so dass das Produkt des zweiten vorbestimmten Werts mit der zweiten Periode (T2.N2) größer ist als das Produkt des ersten vorbestimmten Werts mit der ersten Periode (T1.N1)

9. Verfahren zum Managen eines zeitlich begrenzten Implementierungsrechtes einer vorbestimmten Funktion bestehend aus Messen der Zeit gemäß dem Verfahren nach Anspruch 8, bis der Inhalt (CNT) des ersten Zählers (8) eine vorbestimmte Grenze erreicht oder bis das Benachrichtigungssignal aktiviert wird.
